# EUROPÄISCHE PATENTSCHRIFT

(11) **EP 3 976 285 B1**
(45) Veröffentlichungstag und Bekanntmachung des Hinweises auf die Patenterteilung: **11.11.2026**
(21) Anmeldenummer: 20720339.9
(22) Anmeldetag: 27.03.2020
(51) Int. Cl.: B21D 28/22, B21D 39/03, H02K 15/02

(54) **STANZPAKETIEREN VON BLECHEN**
PUNCHING AND CLINCHING OF METAL SHEETS
FORMATION DE PAQUETS DE TÔLES PAR POINÇONNAGE

(30) Priorität: 27.05.2019 DE 102019114050
(43) Veröffentlichungstag der Anmeldung: 06.04.2022
(73) Patentinhaber: Schaeffler Technologies AG & Co. KG, 91074 Herzogenaurach (DE)
(72) Erfinder: SCHWENK, Wilfried, 77855 Achern-Mösbach (DE)
(74) Vertreter: Schaeffler Technologies
(86) Internationale Anmeldenummer: PCT/DE2020/100252
(87) Internationale Veröffentlichungsnummer: WO 2020/239161

(56) Entgegenhaltungen:
- EP-A1- 1 481 795
- DE-C- 873 237
- JP-B2- 3 031 981
- US-A1- 2013 129 411

## Beschreibung

Die Erfindung betrifft ein Verfahren zum Stanzpaketieren von Blechen.

Es ist bekannt, Bleche durch Stanzpaketieren als einer Variante des Durchsetzfügens zu verbinden. Dabei wird in einem Blech ein Loch erzeugt, und ein Bereich eines darübergelegten Blechs in dieses Loch gedrückt, so dass sich eine Verbindung zwischen den beiden Blechen ergibt. Weitere Bleche können hinzugefügt werden. Die Schriften JP 3 031981 B2, EP 1481795 A1 sowie die DE 873237 C offenbaren entsprechende Verbindungen zwischen Blechen. Ein Verfahren gemäß dem Oberbegriff des Anspruch 1 ist der US 2013/129411 A1 zu entnehmen.

Dieses bekannte Verfahren eignet sich für besonders dünne Bleche nicht mehr, etwa für Bleche mit einer Dicke von 0,35 mm und darunter. Es ergibt sich bei derart geringen Dicken kein ausreichender Überlapp zwischen den einzelnen Blechen, um eine hinreichende Festigkeit der Verbindung zu gewährleisten.

Aufgabe der Erfindung ist daher, ein Verfahren anzugeben, durch welches Bleche zuverlässig miteinander verbunden werden können, insbesondere auch dann, wenn die Bleche geringe Dicke aufweisen.

Diese Aufgabe wird gelöst durch ein Verfahren gemäß Anspruch 1. Die Unteransprüche enthalten vorteilhafte Ausgestaltungen.

Bei dem erfindungsgemäßen Verfahren zum Stanzpaketieren von Blechen werden die zu verbindenden Bleche in zwei Stapel von Blechen aufgeteilt. In den Blechen des ersten Stapels der zwei Stapel wird jeweils ein Loch erzeugt, etwa durch Stanzen. Dies kann insbesondere für jedes der Bleche des ersten Stapels einzeln geschehen. In jedem Fall sind die Löcher der Bleche innerhalb des Stapels deckungsgleich.

In jedes Blech des zweiten Stapels der zwei Stapel von Blechen wird eine Kontur eingeschnitten. Dies kann für jedes Blech des zweiten Stapels einzeln erfolgen. Die Bleche des zweiten Stapels liegen auf den Blechen des ersten Stapels. Es wird dann ein Bereich jedes Bleches des zweiten Stapels von Blechen in einer Stapelrichtung verformt, also in Richtung der darunter liegenden Bleche des ersten Stapels und gegebenenfalls auch von bereits auf dem ersten Stapel liegenden Blechen des zweiten Stapels. Durch die Verformung kommt der verformte Bereich eines Blechs senkrecht zur Stapelrichtung betrachtet neben Bereiche darunterliegender Bleche zu liegen. Insbesondere kann der verformte Bereich eines Blechs des zweiten Stapels in das in den Blechen des ersten Stapels gebildete Loch eindringen.

Der verformte Bereich eines Bleches des zweiten Stapels ist jeweils durch die in das Blech geschnittene Kontur mitbestimmt. Die Verformung kann für jedes Blech des zweiten Stapels einzeln erfolgen. Das Einschneiden der Kontur in ein Blech des zweiten Stapels und die Verformung des Bereichs dieses zweiten Blechs können durch einen entsprechend geformten Stempel in einem Arbeitsgang erfolgen. Zumindest der zu verformende Bereich des dem ersten Stapel nächstliegenden Blechs des zweiten Stapels muss so weit deformiert werden, dass ein Teil des verformten Bereichs neben jedem Blech des ersten Stapels zu liegen kommt, also muss der verformte Bereich den ersten Stapel durch die Löcher der Bleche des ersten Stapels vollständig durchsetzen.

Da der erste Stapel mehrere Bleche umfasst, in denen ein Loch ausgebildet ist, kann ein verformter Bereich eines oder mehrerer Bleche des zweiten Stapels hinreichend weit in das im ersten Stapel vorhandene Loch eindringen, um insgesamt einen ausreichenden Überlapp mit den Blechen des ersten Stapels zu erreichen, so dass eine hinreichende Festigkeit für eine zuverlässige Verbindung zwischen den Blechen gegeben ist. Auf diese Weise können auch dünne Bleche miteinander verbunden werden, da die geringe Dicke der einzelnen Bleche kompensiert wird durch die Stapelung der Bleche im ersten Stapel und den Umstand, dass ein Bereich wenigstens eines Blechs des zweiten Stapels den ersten Stapel wie vorstehend erläutert vollständig durchsetzt. Insbesondere können so auch Bleche mit einer Dicke von 0,35 mm und darunter verbunden werden, mindestens hinab bis zu 0,1 mm oder gar 0,05 mm Dicke.

In einer bevorzugten Ausführungsform werden die Bleche des zweiten Stapels beim Verformen derart plastisch deformiert, dass sich eine Verspannung zwischen dem jeweiligen verformten Bereich eines Blechs des zweiten Stapels mit mindestens einem darunterliegenden Blech ergibt. Das darunterliegende Blech kann dabei ein Blech des ersten Stapels oder auch ein Blech des zweiten Stapels sein.

In einer Ausführungsform hat das in die Bleche des ersten Stapels eingebrachte Loch eine gestreckte Form mit mittig reduzierter Breite.

In einer Ausführungsform entspricht die in die Bleche des zweiten Stapels eingeschnittene Kontur einem Teil einer Kontur des Lochs. Dies ist für die Verformung des zu verformenden Bereichs des Blechs des zweiten Stapels in den ersten Stapel hinein vorteilhaft.

Der Schutzanspruch erstreckt sich auch auf Anordnungen aus Blechen, welche mit dem hierin beschriebenen erfindungsgemäßen Verfahren verbunden worden sind. Solche Anordnungen finden beispielsweise, und ohne die Erfindung darauf zu beschränken, Anwendung in Rotoren von elektrischen Maschinen oder in Kernen von Transformatoren. Abhängig vom Design der jeweiligen Anordnung sind vom Fachmann die Stellen, an denen die Bleche mit dem erfindungsgemäßen Verfahren verbunden werden, zu wählen. Aufgrund des erfindungsgemäßen Verfahrens hat der Fachmann die Freiheit, beim Entwurf der jeweiligen Anordnung auf dünnere Bleche zurückzugreifen, als gemäß dem Stand der Technik durch Stanzpaketieren verbunden werden können.

Nachfolgend werden die Erfindung und ihre Vorteile noch an Hand der beigefügten schematischen Zeichnungen näher erläutert.
- Figur 1: zeigt eine Schnittansicht durch eine Anordnung erfindungsgemäß verbundener Bleche.
- Figur 2: zeigt eine Draufsicht auf eine Anordnung erfindungsgemäß verbundener Bleche.

Die Zeichnungen zeigen lediglich Ausführungsbeispiele der Erfindung. Keinesfalls sind die Zeichnungen als Beschränkung der Erfindung auf die gezeigten Ausführungsbeispiele aufzufassen.

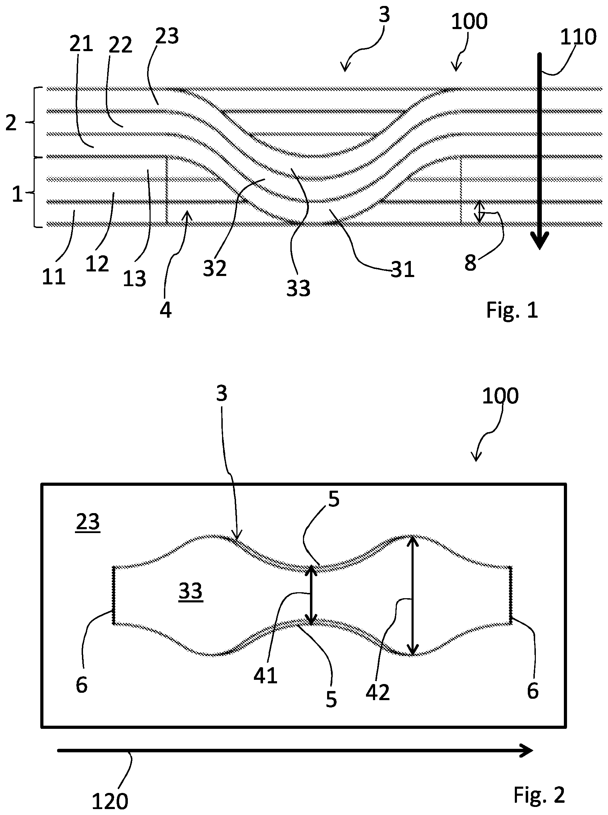

**Fig. 1** zeigt eine Anordnung von Blechen 11, 12, 13, 21, 22, 23. Die Bleche 11, 12, 13 bilden im Sinne dieser Anmeldung den ersten Stapel 1 von Blechen, die Bleche 21, 22, 23 bilden im Sinne dieser Anmeldung den zweiten Stapel 2 von Blechen. In einem Verbindungsbereich 3 ist in die Bleche 11, 12, 13 des ersten Stapels 1 ein Loch 4 geschnitten, und Bereiche 31, 32, 33 der Bleche 21, 22, 23 des zweiten Stapels 2 sind derart verformt, dass sie in dieses Loch 4 eindringen. Insbesondere durchsetzt der Bereich 31 des Bleches 21 das Loch 4 vollständig und ist daher im Verbindungsbereich 3 zu allen Blechen 11, 12, 13 des ersten Stapels 1 benachbart. Die Verformung der Bereiche 31, 32, 33 erfolgt in Richtung einer Stapelrichtung 110, welche eine Normalenrichtung zu den aufeinandergestapelten undeformierten Blechen bildet. Angezeigt ist ferner eine Dicke 8 eines Bleches 11.

**Fig. 2** zeigt eine Draufsicht auf die Anordnung 100 aus Fig. 1, die Stapelrichtung 110 ist hier in die Zeichenebene gerichtet. Dementsprechend sind ein Teil des obersten Bleches 23 und dessen verformter Bereich 33 dargestellt. Das Loch 4 entspricht in seiner Querschnittsform senkrecht zur Stapelrichtung 110 der Draufsicht des Bereichs 33. Die dieser Form entsprechende Verformung der Bereiche 31, 32, 33 wird durch Einschneiden von Konturen 5 in die Bleche 21, 22, 23 erreicht, welche der Form des Lochs 4 entsprechen. Die Konturen 5 bilden keine geschlossene Kurve, im Bereich der Verformungskanten 6 erfolgt kein Schnitt. Das Loch 4 (und dementsprechend der verformte Bereich 33) erstreckt sich entlang einer Richtung 120. In dem gezeigten Ausführungsbeispiel ist das Loch 4 langgestreckt, seine Abmessung in der Richtung 120 ist größer als jegliche seiner Abmessungen senkrecht zur Richtung 120 in der Ebene des Bleches. Entlang der Erstreckung des Loches 4 in der Richtung 120 ist mittig eine Breite 41, also eine Ausdehnung senkrecht zur Richtung 120, des Loches 4 reduziert, also kleiner als eine Breite 42 des Loches 4 an einer anderen Position entlang der Richtung 120. In der gezeigten Ausführungsform hat das Loch 4 eine symmetrische, taillierte Form. Die reduzierte Breite des Loches 4 und der verformten Bereiche 31, 32, 33 begünstigt eine plastische Deformation der verformten Bereiche 31, 32, 33 und damit eine zuverlässigere Verbindung mit den Blechen 11, 12, 13 des ersten Stapels 1.

### Bezugszeichenliste

- 1: erster Stapel
- 2: zweiter Stapel
- 3: Verbindungsbereich
- 4: Loch
- 5: Kontur
- 6: Verformungskante
- 8: Dicke
- 11, 12, 13: Blech
- 21, 22, 23: Blech
- 31, 32, 33: verformter Bereich
- 41: Breite
- 42: Breite
- 100: Anordnung
- 110: Stapelrichtung
- 120: Richtung

## Patentansprüche

1. Verfahren zum Stanzpaketieren von Blechen (11, 12, 13, 21, 22, 23), umfassend mindestens die folgenden Schritte:
Erzeugen eines Loches (4) in den Blechen (11, 12, 13) eines ersten Stapels (1) von Blechen;
Einschneiden von Konturen (5) in die Bleche (21, 22, 23) eines zweiten Stapels (2) von Blechen, wibei die Konturen (5) keine geschlossene Kurve bilden;
Verformen eines Bereichs (31, 32, 33) der Bleche (21, 22, 23) des zweiten Stapels (2) von Blechen in einer Stapelrichtung (110) **dadurch gekennzeichnet, dass** ein Teil des zu verformenden Bereichs (31) eins dem ersten Stapel (1) nächstliegenden Blechs (21) des zweiten Stapels (2), neben jedem der Bleche (11, 12, 13) des ersten Stapels (1) zu liegen kommt, so dass der verformte Bereich (31) den ersten Stapel (1) durch die Löcher (4) in den Blechen (11, 12, 13) des ersten Stapels (1) vollständig durchsetzt.

2. Verfahren nach Anspruch 1, wobei die Bleche (21, 22, 23) des zweiten Stapels (2) beim Verformen derart plastisch deformiert werden, dass sich eine Verspannung zwischen dem jeweiligen verformten Bereich (31, 32, 33) eines Blechs (21, 22, 23) des zweiten Stapels (2) mit mindestens einem darunterliegenden Blech (11, 12, 13, 21, 22) ergibt.

3. Verfahren nach einem der vorhergehenden Ansprüche, wobei das Loch (4) eine Form mit mittig reduzierter Breite (41) aufweist.

4. Verfahren nach einem der vorhergehenden Ansprüche, wobei die in die Bleche (21, 22, 23) des zweiten Stapels (2) eingeschnittene Kontur (5) einem Teil einer Kontur des Lochs (4) entspricht.

5. Verfahren nach einem der vorhergehenden Ansprüche, wobei das Erzeugen eines Loches (4) in den Blechen (11, 12, 13) des ersten Stapels (1) von Blechen für jedes Blech (11, 12, 13) des ersten Stapels (1) einzeln erfolgt.

6. Verfahren nach einem der vorhergehenden Ansprüche, wobei das Verformen des Bereichs (31, 32, 33) der Bleche (21, 22, 23) des zweiten Stapels (2) von Blechen in der Stapelrichtung (110) für jedes Blech (21, 22, 23) des zweiten Stapels (2) einzeln erfolgt.

7. Verfahren nach einem der vorhergehenden Ansprüche, wobei eine Dicke (8) eines der Bleche (11, 12, 13, 21, 22, 23) nicht über 0,35 mm beträgt.

## Claims

1. A method for punching and clinching metal sheets (11, 12, 13, 21, 22, 23), comprising at least the following steps:
creating a hole (4) in the metal sheets (11, 12, 13) of a first stack (1) of metal sheets;
cutting contours (5) into the metal sheets (21, 22, 23) of a second stack (2) of metal sheets, wherein the contours (5) do not form a closed curve;
deforming a region (31, 32, 33) of the metal sheets (21, 22, 23) of the second stack (2) of metal sheets in a stacking direction (110), **characterized in that** a part of the region (31) to be deformed of a metal sheet (21) of the second stack (2) lying nearest to the first stack (1) comes to lie next to each of the metal sheets (11, 12, 13) of the first stack (1) so that the deformed region (31) completely penetrates the first stack (1) through the holes (4) in the metal sheets (11, 12, 13) of the first stack (1).

2. The method according to claim 1, wherein the metal sheets (21, 22, 23) of the second stack (2) are plastically deformed during deforming such that a tension is created between the respective deformed region (31, 32, 33) of a metal sheet (21, 22, 23) of the second stack (2) and at least one underlying metal sheet (11, 12, 13, 21, 22).

3. The method according to any one of the preceding claims, wherein the hole (4) has a shape with a centrally reduced width (41).

4. The method according to any one of the preceding claims, wherein the contour (5) cut into the metal sheets (21, 22, 23) of the second stack (2) corresponds to a part of a contour of the hole (4).

5. The method according to any one of the preceding claims, wherein creating a hole (4) in the metal sheets (11, 12, 13) of the first stack (1) of metal sheets is carried out individually for each metal sheet (11, 12, 13) of the first stack (1).

6. The method according to any one of the preceding claims, wherein deforming the region (31, 32, 33) of the metal sheets (21, 22, 23) of the second stack (2) of metal sheets in the stacking direction (110) is carried out individually for each metal sheet (21, 22, 23) of the second stack (2).

7. The method according to any one of the preceding claims, wherein a thickness (8) of one of the metal sheets (11, 12, 13, 21, 22, 23) does not exceed 0.35 mm.

## Revendications

1. Procédé destiné à la formation de paquets de tôles (11, 12, 13, 21, 22, 23) par poinçonnage, comprenant au moins les étapes suivantes consistant à :
créer un trou (4) dans les tôles (11, 12, 13) d'une première pile (1) de tôles ;
découper des contours (5) dans les tôles (21, 22, 23) d'une seconde pile (2) de tôles, les contours (5) ne formant pas de courbe fermée ;
déformer une zone (31, 32, 33) des tôles (21, 22, 23) de la seconde pile (2) de tôles dans une direction d'empilement (110) **caractérisé en ce qu'**une partie de la zone (31) à déformer d'une tôle (21) de la seconde pile (2) la plus proche de la première pile (1) se retrouve adjacente à chacune des tôles (11, 12, 13) de la première pile (1), de telle sorte que la zone (31) déformée traverse entièrement la première pile (1) à travers les trous (4) des tôles (11, 12, 13) de la première pile (1).

2. Procédé selon la revendication 1, dans lequel les tôles (21, 22, 23) de la seconde pile (2) sont déformées plastiquement pendant la déformation, de manière à créer une tension entre la zone (31, 32, 33) déformée respective d'une tôle (21, 22, 23) de la seconde pile (2) et au moins une tôle (11, 12, 13, 21, 22) sous-jacente.

3. Procédé selon l'une quelconque des revendications précédentes, dans lequel le trou (4) présente une forme dont la largeur (41) est réduite au centre.

4. Procédé selon l'une quelconque des revendications précédentes, dans lequel le contour (5) découpé dans les tôles (21, 22, 23) de la seconde pile (2) correspond à une partie d'un contour du trou (4).

5. Procédé selon l'une quelconque des revendications précédentes, dans lequel la création d'un trou (4) dans les tôles (11, 12, 13) de la première pile (1) de tôles est effectuée individuellement pour chaque tôle (11, 12, 13) de la première pile (1).

6. Procédé selon l'une quelconque des revendications précédentes, dans lequel la déformation de la zone (31, 32, 33) des tôles (21, 22, 23) de la seconde pile (2) de tôles dans la direction d'empilement (110) est effectuée individuellement pour chaque tôle (21, 22, 23) de la seconde pile (2).

7. Procédé selon l'une quelconque des revendications précédentes, dans lequel l'épaisseur (8) de l'une des tôles (11, 12, 13, 21, 22, 23) ne dépasse pas 0,35 mm.
